# EUROPÄISCHE PATENTSCHRIFT

(11) **EP 1 144 520 B1**
(45) Veröffentlichungstag und Bekanntmachung des Hinweises auf die Patenterteilung: **28.04.2004**
(21) Anmeldenummer: 99963328.2
(22) Anmeldetag: 24.11.1999
(51) Int. Cl.: C09D 5/44, C08F 290/06

(54) **WÄSSRIGE ELEKTROTAUCHLACKE, DEREN HERSTELLUNG UND VERWENDUNG**
AQUEOUS ELECTRODEPOSITION COATING, THE PRODUCTION AND USE THEREOF
PEINTURE AQUEUSE D'ELECTRODEPOSITION, SA PRODUCTION ET SON UTILISATION

(30) Priorität: 10.12.1998 DE 19856990; 23.07.1999 DE 19934763
(43) Veröffentlichungstag der Anmeldung: 17.10.2001
(73) Patentinhaber: E.I. DU PONT DE NEMOURS & COMPANY INCORPORATED, Wilmington, Delaware 19898 (US)
(72) Erfinder: FIEBERG, Andreas, D-40625 Düsseldorf (DE); REKOWSKI, Volker, D-44892 Bochum (DE); SAATWEBER, Dietrich, D-42369 Wuppertal (DE); SIMMROCK, Hans-Ulrich, D-40627 Düsseldorf (DE); VOGT-BIRNBRICH, Bettina, D-42719 Solingen (DE)
(74) Vertreter: Gille Hrabal Struck Neidlein Prop Roos
(86) Internationale Anmeldenummer: PCT/EP1999/009063
(87) Internationale Veröffentlichungsnummer: WO 2000/034397

(56) Entgegenhaltungen:
- US-A- 3 954 587
- US-A- 4 981 887
- US-A- 5 415 749

## Beschreibung

Die Erfindung betrifft anodisch abscheidbare, wäßrige Elektrotauchlacke, die durch energiereiche Strahlung härtbar sind und den Vorteil einer guten Durchhärtung auch bei hohen Schichtdicken haben und gute mechanische Eigenschaften, sowie insbesondere eine hohe Beständigkeit in der Industrieatmosphäre ergeben. Sie betrifft auch deren Herstellung und Verwendung zum Lackieren von elektrisch leitfähigen Untergründen z.B. aus Metall, elektrisch leitendem Kunststoff, z.B. metallisierter Kunststoff, oder elektrisch leitenden Überzügen.

Nach dem Elektrotauchlackverfahren aufgebrachte Beschichtungen weisen den Vorteil auf, daß sie nur eine geringe Menge Restwasser enthalten. Die erhaltene Beschichtung muß daher nach Abspülen von noch anhaftendem Badmaterial nicht vorgetrocknet werden, sondern kann nach einem eventuellen Abblasen von Wassertropfen durch energiereiche Strahlung ausgehärtet werden.

In der US-A-3 954 587 werden modifizierte Epoxy- und Alkydharze bzw. mit Malelnsäurenhydrid modifizierte Öle beschrieben, die mit einer multifunktionellen Komponente als Reaktivverdünner kombiniert werden.

In der EP-A-0 473 169 werden wäßrige, wärmehärtbare ungesättigte Polyurethanzusammensetzungen mit einem gewichtsmittleren Molekulargewicht Mw von 20000 bis 60000 beschrieben, die beispielsweise durch Spritzauftrag als Top-Coats eingesetzt werden. Sie können unter anderem auch durch UV-Bestrahlung gehärtet werden. Die Polyurethanzusammensetzungen werden durch Kettenverlängerung eines Isocyanatprepolymeren, welches ungesättigte Gruppen in Form von Allylgruppen und andere ethylenisch ungesättigte Gruppen, besonders in Form von ungesättigten Polyestern enthält, mit Kettenverlängerungsmitteln mit aktiven Wasserstoffatomen erhalten. Es hat sich gezeigt, daß die Durchhärtung der dabei erhaltenen Beschichtungen bei Bestrahlung mit energiereicher Strahlung unzureichend ist, insbesondere bei hohen Schichtdicken. Auch sind die Beschichtungen hinsichtlich mechanischer und chemischer Beständigkeiten, inbesondere ihrer Sprödigkeit und der Beständigkeit in Industrieatmosphäre verbesserungsbedürftig. Nebenbei wird zwar erwähnt, daß die Polyurethanzusammensetzungen auch für die Elektrotauchlackierung eingesetzt werden können, es hat sich jedoch gezeigt, daß die dabei erzielten Beschichtungen einen unzureichenden Verlauf aufweisen.

Es war daher die der Erfindung zugrundeliegende Aufgabe, anodisch abscheidbare, wäßrige Elektrotauchlacke bereitzustellen, die diese Mängel nicht aufweisen, die durch energiereiche Strahlung auch bei hohen Schichtdicken durchhärten und Lackfilme mit gegenüber dem Stand der Technik verbesserten Eigenschaften, besonders hinsichtlich der Elastizität und der Beständigkeit in der Industrieatmosphäre liefern.

Es hat sich gezeigt, daß diese Aufgabe mit dem einen Gegenstand der Erfindung bildenden anodisch abscheidbaren wäßrigen Elektrotauchlack gelöst werden kann, der enthält
A) eine wäßrige Dispersion die ein oder mehrere anionisch modifizierte Polyurethan(meth)acrylate (a1) mit terminalen, ethylenisch ungesättigten (meth)acrylischen Doppelbindungen, und einen oder mehrere Reaktivverdünner (a2) mit mindestens zwei ethylenisch ungesättigten (meth)acrylischen Doppelbindungen enthält, wobei die (meth)acrylatischen Doppelbindungen des Gemisches aus (a1) und (a2) einer Bromzahl von 20 bis 150 g Brom/100 g Festkörper entsprechen, sowie
B) gegebenenfalls einen oder mehrere Photoinitiatoren und/oder gegebenenfalls einen oder mehrere thermisch aktivierbare Radikalinitiatoren,
wobei die terminalen ethylenisch ungesättigten (meth)acrylischen Doppelbindungen der Polyurethan(meth)acrylate über Urethan-, Harnstoff-, Amid- oder Estergruppen mit dem anionisch modifizierten Polyurethanprepolymeren verbunden sind, sowie gegebenenfalls übliche Hilfs- und Zusatzstoffe, Pigmente und/oder Füllstoffe, wobei
die wässrige Dispersion A)
40 bis 85 Gew.-% der Komponente a1) und 15 bis 60 Gew.-% der Komponente a2), jeweils bezogen auf den Festkörpergehalt der Komponente A) enthält und der Festkörpergehalt 30 bis 70 Gew,-% beträgt, und wobei die wässrige Dispersion A) erhältlich ist durch Bereitung des Polyurethan(meth)acrylats (a1), durch Herstellung eines Urethanprepolymers mit terminalen NCO-Gruppen, durch Umsetzung von:
i) einem oder mehreren aliphatischen, cycloaliphatischen, araliphatischen und/oder aromatischen Polyisocyanaten,
ii) einer oder mehreren Polyhydroxylverbindungen mit einem zahlenmittleren Molekulargewicht Mn von 400 bis 5000,
iii) einer oder mehreren Verbindungen mit einer anionischen Gruppe und zwei gegenüber Isocyanaten funktionellen Gruppen,
iv) gegebenenfalls einer oder mehreren Polyhydroxylverbindungen mit einem zahlenmittleren Molekulargewicht Mn von 60 bis unter 400,
und anschließende Umsetzung des so erhaltenen Urethanprepolymers
v) mit einer oder mehreren Verbindungen, die eine oder mehrere ethylenisch ungesättigte (meth)ocrylische Gruppen und eine oder mehrere gegenüber Isocyanat reaktive Gruppen aufweisen, ausgewählt aus Hydroxyalkyl(meth)acrylaten, Aminoalkyl(meth)acrylaten und/oder (Methy)acrylamiden und/oder mit einer oder mehreren Verbindungen, die eine mit Isocyanat reaktive Gruppe und eine zur Einführung einer (meth)acrylischen Estergruppe geeignete Gruppe aufweisen und anschließende Umsetzung zur Einführung einer (meth)acrylischen Estergruppe,
vi) und gegebenenfalls mit einer oder mehreren Verbindungen mit einer oder mehreren gegenüber Isocyanat reaktiven Gruppen, die keine (meth)acrylischen Doppelbindungen aufweisen,
worauf mit dem Reaktivverdünner a2) verdünnt und unter zumindest teilweiser Neutralisation in die wässrige Phase überführt wird.

Unter (meth)acryl soll hier acryl und/oder methacryl verstanden werden.

Die wässrige anionische Polyurethandispersion (A) hat einen Festkörper (Polyurethan(meth)acrylat plus Reaktivverdünner) von 30 bis 70 Gew.-%, bevorzugt von 40 bis 55 Gew.-%. Ihr Gehalt an terminalen ethylenisch ungestättigten (meth)acrylischen Doppelbindungen entspricht einer Bromzahl von 20 bis 150, bevorzugt bei 20 bis 80 g Brom/100 g Festkörper (Polyurethan(meth)ocrylat plus Reaktivverdünner).

Die wäßrige Dispersion (A) kann beispielsweise nach dem folgenden Verfahren hergestellt werden:

Zuerst wird ein anionisch modifiziertes Urethanprepolymer mit terminalen NCO-Gruppen hergestellt, indem man
i) ein oder mehrere aliphatische, cycloaliphatische, araliphatische und/oder aromatische Polyisocyanate, wobei die aromatischen Polyisocyanate bevorzugt ein Molekulargewicht über 174 aufweisen,
ii) eine oder mehrere höhermolekulare Polyhydroxylverbindung(en) mit einem zahlenmittleren Molekulargewicht (Mn) von beispielsweise 400 bis 5000, bevorzugt von 1000 bis 2500,
iii) eine oder mehrere Verbindung(en), die eine anionische Gruppe und zwei gegenüber Isocyanaten funktionelle Gruppen aufweisen
   und
iv) gegebenenfalls eine oder mehrere niedermolekulare Polyhydroxylverbindungen, beispielsweise mit einem zahlenmittleren Molekulargewicht (Mn) von 60 bis unter 400 umsetzt.

Die Umsetzung kann beispielsweise in einem Ein- oder Mehrstufenverfahren lösemittelfrei oder in einem polaren, gegenüber NCO-Gruppen inerten Lösemittel erfolgen.

Die Mengen der Komponenten (i) bis (iv) werden dabei beispielsweise so gewählt, daß das Verhältnis von NCO-Gruppen zu OH-Gruppen zwischen 4 : 1 bis 1,1 : 1 liegt.

Danach werden an die freien NCO-Gruppen die ethylenisch ungesättigten Gruppen angelagert. Das geschieht beispielsweise durch Umsetzung mit Verbindungen (v), die eine oder mehrere ethylenisch ungesättigte (meth)acrylische Gruppen und eine oder mehrere gegenüber Isocyanaten reaktive Gruppe aufweisen, wobei die stöchiometrischen Verhältnisse von gegenüber NCO-Gruppen reaktiven Gruppen zu Isocyanatgruppen so gewählt werden, daß keine freien NCO-Gruppen verbleiben.

Zur Regulierung der Funktionalität (Anzahl der ethylenisch ungesättigten (meth)acrylischen Doppelbindungen) können auch Verbindungen (vi) mitverwendet werden, die eine oder mehrere, bevorzugt eine gegenüber Isocyanaten reaktive Gruppen aufweisen, aber keine (meth)acrylischen Doppelbindungen enthalten. Sie können andere ethylenisch ungesättigte Doppelbindungen enthalten oder frei davon sein. Die Verbindungen (vi) können beispielsweise im Anschluß an die Umsetzung der Komponenten (i) bis (iv) zur Herstellung eines Urethanprepolymers vor, zusammen mit oder nach Umsetzung mit der Komponente (v) einreagiert werden.

Die freien NCO-Gruppen können aber zunächst auch mit Verbindungen umgesetzt werden, die neben einer gegenüber Isocyanaten reaktiven Gruppe eine oder mehrere andere reaktive Gruppen enthalten, die wiederum mit komplementär reaktiven Gruppen von ethylenisch ungesättigten (meth)acrylischen Verbindungen reagieren können, wie beispielsweise Hydroxycarbonsäure mit Glycidyl(meth)acrylat. Auf diese Weise können beispielsweise über Estergruppen mit dem Polyurethanprepolymeren verbundene (meth)acrylische Doppelbindungen eingeführt werden.

Die anionisch modifizierten Polyurethan(meth)acrylate mit terminalen ethylenisch ungesättigten (meth)acrylischen Doppelbindungen (a1) weisen beispielsweise ein zahlenmittleres Molekulargewicht Mn von 800 bis 5000 und/oder ein gewichtsmittleres Molekulargewicht Mw von 5000 bis 20000, bevorzugt unter 20000 auf. Ihre Säurezahl beträgt bevorzugt von 5 bis 50, besonders bevorzugt von 10 bis 35. Ihr Gehalt an terminalen ethylenisch ungesättigten (meth)acrylischen Doppelbindungen beträgt bevorzugt von 4 bis 80 g Brom/100 g Festharz, besonders bevorzugt von 5 bis 35 g Brom/100 g Festharz.

Die, wie vorstehend beschrieben, erhältliche Komponente (a1) wird mit dem Reaktivverdünner (a2) verdünnt, zumindest teilweise neutralisiert und in die wäßrige Phase überführt. Dabei liegen bevorzugt mindestens 25 % der Säuregruppen in neutralisierter Form vor. Das Neutralisationsmittel kann vor oder mit dem Wasser zugegeben werden, es kann aber auch in dem Wasser vorgelegt werden, in welches das Polymere dispergiert wird. Ein Zusatz von externen Emulgatoren ist dabei nicht erforderlich. Zur Überführung in die wäßrige Phase werden beispielsweise schnellaufende Rührscheibengeräte, Rotor-/Stator-Mischer oder Hochdruckhomogenisatoren verwendet. Anschließend wird das inerte Lösungsmittel gegebenenfalls unter Anlegen von Vakuum abdestilliert.

Der Reaktivverdünner (a2) kann aber auch nachträglich in die bereits wäßrige Dispersion zugegeben werden. Dabei wird die wäßrige Dispersion wie vorstehend beschrieben hergestellt, wobei zunächst die Komponente (a1) noch nicht mit dem Reaktivverdünner (a2) oder nur mit einem Teil des Reaktivverdünners (a2) verdünnt wird.

Als Polyisocyanate (i) eignen sich beliebige organische Di- und/oder Polyisocyanate mit aliphatisch, cycloaliphatisch, araliphatisch und/oder aromatisch gebundenen freien Isocyanatgruppen, die im Mittel mehr als eine, bevorzugt zwei Isocyanatgruppen pro Molekül aufweisen. Bevorzugt sind aliphatisch, cycloaliphatisch und/oder araliphatisch gebundene Di- und/oder Polyisocyanate. Aromatische Diisocyanate weisen bevorzugt ein Molekulargewicht von über 174 auf.

Bevorzugt werden Polyisocyanate, die etwa 3 bis 36, besonders bevorzugt 8 bis 15 Kohlenstoffatome enthalten. Beispiele für geeignete Diisocyanate sind Diphenylmethandiisocyanat und insbesondere Hexamethylendiisocyanat, Tetramethylxylylendiisocyanat, Isophorondiisocyanat, Dicyclohexylmethandiisocyanat, Cyclohexandiisocyanat und deren Mischungen.

Sehr gut geeignet sind beispielsweise die sogenannten "Lackpolyisocyanate" auf Basis von Hexamethylendiisocyanat, Isophorondiisocyanat und/oder Dicyclohexylmethandiisocyanat, wobei es sich dabei um die an sich bekannten Biuret, Urethan-, Uretdion- und/oder Isocyanuratgruppen aufweisende Derivate dieser Diisocyanate handelt.

Beispiele für geeignete höhermolekulare Polyhydroxylverbindungen (ii) sind lineare oder verzweigte Polyole, beispielsweise mit einer OH-Zahl von 30 bis 150. Bevorzugt handelt es sich dabei um gesättigte Polyester- und/oder Polyetherdiole und/oder Polycarbonatdiole und/oder sogenannte Dimerfettalkohole, jeweils mit einer zahlenmittleren Molmasse Mn von 400 bis 5000, beispielsweise 500 bis 5000 oder Mischungen davon. Besonders bevorzugt sind dabei gesättigte Polyesterdiole, Polycarbonatdiole und/oder Dimerfettalkohole.

Geeignete lineare oder verzweigte Polyetherdiole sind beispielsweise Poly(oxyethylen)glykole, Poly(oxypropylen)glykole und/oder Poly(oxybutylen)glykole.

Polyesterdiole sind bevorzugt und können in bekannter Weise durch Veresterung von Dicarbonsäuren oder ihren Anhydriden mit Diolen hergestellt werden. Um verzweigte Polyester herzustellen können in geringem Umfang auch Polyole oder Polycarbonsäuren mit höherer Funktionalität eingesetzt werden.

Als geeignete Verbindungen (iii) werden Verbindungen eingebracht, die zwei mit Isocyanat reagierende Gruppen, z.B. H-aktive Gruppen und mindestens eine zur Anionenbildung befähigte Gruppe enthalten. Geeignete, mit Isocyanatgruppen reagierende Gruppen sind insbesondere Hydroxylgruppen sowie primäre und/oder sekundäre Aminogruppen. Gruppen die zur Anionenbildung befähigt sind, sind beispielsweise Carboxyl-, Sulfonsäure- und/oder Phosphonsäuregruppen. Beispiele für solche Verbindungen sind Dihydroxycarbonsäuren wie Dihydroxypropionsäure, Dihydroxybuttersäure, Dihydroxybernsteinsäure, Diaminobenzoesäure und bevorzugt Dimethylolalkansäuren wie z.B. Dimethylolpropionsäure.

Beispiele für geeignete niedermolekulare Polyhydroxylverbindungen (iv) haben bevorzugt eine zahlenmittlere Molmasse Mn von 60 bis unter 500, beispielsweise von 60 bis unter 400 und können aliphatische, alicyclische und/oder aromatische Gruppen enthalten. Geeignete niedermolekulare Polyhydroxylverbindungen sind beispielsweise Diole, Triole oder Polyole wie Ethylenglykol, Diethylenglykol, Triethylenglykol, 1,2 Propandiol, 1,3 Propandiol, 1,4 Butandiol, 1,2 Butylenglykol, 1,6 Hexandiol, Trimethylolpropan, Ricinusöl oder hydriertes Ricinusöl, Pentaerythrit, 2 Cyclohexandiol, 1,4 Cyclohexandimethanol, Bisphenol A, Bisphenol F, Neopentylglykol, Hydroxypivalinsäureneopentylglykolester, hydroxyethyliertes Bisphenol A, hydriertes Bisphenol A sowie Mischungen aus diesen Polyolen.

Geeignete Verbindungen (v), die eine oder mehrere ethylenisch ungesättigte (meth)acrylische Gruppen und eine oder mehrere gegenüber Isocyanaten reaktive Gruppen aufweisen, enthalten als reaktive Gruppen Hydroxyl-, Amino- und/oder Amidgruppen. Über die hydroxylgruppenhaltigen Verbindungen (v) werden über Urethangruppen gebundene (meth)acrylische Doppelbindungen in das Polyurethanprepolymere eingeführt; Aminogruppen enthaltende Verbindungen (v) führen zur Bindung über Harnstoffgruppen; Amidgruppen enthaltende Verbindungen (v) führen zur Bindung über "Amidgruppen", wobei insbesondere α-Ketoharnstoff-Gruppen ausgebildet werden.

Beispiele hydroxylgruppenhaltiger Verbindungen (v) sind Hydroxy(meth)acrylate, wie beispielsweise hydroxylgruppenhaltige Ester der Acrylsäure und/oder Methacrylsäure mit 2 bis 12, bevorzugt 2 bis 6 C-Atomen im Hydroxyalkylrest wie beispielsweise 2-Hydroxyethyl(meth)acrylat, 3-Hydroxypropyl(meth)acrylat, 4-Hydroxybutyl(meth)acrylat, 5-Hydroxypentyl(meth)acrylat, 6-Hydroxyhexyl(meth)acrylat, 7-Hydroxyheptyl(meth)acrylat, 8-Hydroxyoctyl(meth)acrylat sowie die entsprechenden isomeren Verbindungen, 2-Hydroxy-1-methylethyl(meth)acrylat, 1,3-Dimethyl-3-hydroxybutyl(meth)acrylat und andere; Umsetzungsprodukte von (Meth)acrylsäure mit Polyolen wie z.B. Glycerindiacrylat, Trimethyloldiacrylat, Pentaerythrittriacrylat; Preaddukte aus Glycidylmethacrylat und Hydroxycarbonsäuren wie z.B. Glykolsäure; Umsetzungsprodukte aus Hydroxy(meth)acrylaten mit ε-Caprolacton; Umsetzungsprodukte aus (Meth)acrylsäure mit dem Glycidylester einer Carbonsäure mit einem tertiären α-C-Atom wie z.B. Cardura® der Firma Shell.

Beispiele für aminogruppenhaltige Verbindungen sind Amino(meth)acrylate wie beispielsweise tert.-Butylaminoethyl(meth)acrylat, (Meth)acrylsäure-β-ureidoethylester oder Umsetzungsprodukte aus (Meth)acrylsäurechlorid und Diaminen.

Beispiele für Verbindungen mit Amidgruppen sind (Meth)acrylamid, N-Methylol(meth)acrylamid, Isobutylmethylol(meth)acrylamid.

Die Verbindungen (v) können einzeln oder als Mischungen verwendet werden.

Geeignete Verbindungen (vi) zur Regulierung der Funktionalität sind beispielsweise höhere Glykoläther und/oder Fettalkohole und/oder Fettamine. Dabei können beispielsweise ein oder mehrere aliphatische C₄ - C₃₆-Alkohole und/oder -Amine eingesetzt werden, deren Umsetzung dann in der Regel unter vollständigem Verbrauch ihrer OH-, NH-, oder NH₂-Gruppen erfolgt. Fettamine und/oder Fettalkohole mit mehr als 12 C-Atomen sind bevorzugt. Beispiele sind Laurylalkohol, Stearylalkohol sowie die entsprechenden Amine.

Als Reaktivverdünner (a2) eignen sich ethylenisch ungesättigte, insbesondere niedermolekulare und oligomolekulare Verbindungen. Die Reaktivverdünner weisen im Gegensatz zur Polyurethan(meth)acrylat-Komponente (a1) üblicherweise keine anionischen Modifizierungen auf. Die niedermolekularen und/oder oligomolekularen Reaktivverdünner können beispielsweise errechnete Molekulargewichte in der Größenordnung von bis zu 10000, z.B. 100 bis 10000 aufweisen. Geeignete Reaktivverdünner sind beispielsweise Di- und Poly(meth)acrylate von Glykolen mit 2 bis 6 C-Atomen und Polyolen mit 3 bis 4 OH-Gruppen und 3 bis 6 C-Atomen, wie Ethylenglykoldiacrylat, Propandiol-1,3-diacrylat, Butandiol-1,4-diacrylat, Hexandiol-1,6-diacrylat, Trimethylolpropantriacrylat, Pentaerythrittriacrylat, Pentaerythrittetraacrylat sowie entsprechende Methacrylate, ferner Di(meth)acrylate von Polyetherglykolen des Glykols, Propandiol-1,3, Butandiol-1,4, tetraethoxyliertes Trimethylolpropantriacrylat und/oder Oligourethan(meth)acrylate mit 2 bis 6 ethylenisch ungesättigten Doppelbindungen. Es können auch Mischungen eingesetzt werden.

Als Neutralisationsmittel eignen sich übliche Basen wie beispielsweise Ammoniak, NaOH, KOH. LiOH, primäre, sekundäre und tertiäre Amine wie Diethylamin, Triethylamin, Morpholin; Alkanolamine wie Diisopropanolamin, Dimethylaminoethanol, Triisopropanolamin, Dimethylamino-2-methylpropanol: quarternäre Ammoniumhydroxide oder gegebenenfalls auch geringe Mengen an Aakylenpolyaminen wie Ethylendiamin. Es können auch Mischungen derartiger Neutralisationsmittel verwendet werden. Durch die Auswahl der Neutralisationsmittel kann die Stabilität der Dispersion beeinflußt werden. Die Menge an Neutralisationsmittel wird im allgemeinen so gewählt, daß mindestens 25 % der ionischen Gruppen in Salzform vorliegen.

Die erfindungsgemäßen Elektrotauchlacke können gegebenenfalls einen oder mehrere Photoinitiatoren und/oder gegebenenfalls einen oder mehrere thermisch aktivierbare Radikalinitiatoren enthalten. Bevorzugt werden die erfindungsgemäßen Elektrotauchlacke in Gegenwart von Photoinitiatoren ausgehärtet, die Aushärtung kann jedoch auch ohne Photoinitiatoren erfolgen.

Als geeignete Photoinitiatoren (B) können alle für radikalisch härtende Systeme üblichen Initiatoren eingesetzt werden, beispielsweise solche, die im Wellenlängenbereich von 190 bis 600 nm absorbieren.

Beispiele sind Acetophenon und -derivate, Benzophenon und -derivate, Benzil, Michler's Keton, Thioxanthon und -derivate, Anthron, Anthrachinon und -derivate; Benzoin und -derivate, Benzoinether und -derivate, Dialkoxyacetophenone, Acyloximester, Benzilketale, Hydroxyalkylphenone; phosphororganische Verbindungen, wie z.B. Acylphosphinoxide; Halogenketone. Die Photoinitiatoren werden in üblichen Mengen z.B. von 0,1 bis 20 Gew.-%, bevorzugt 0,1 bis 5 Gew.-%, bezogen auf die Summe von radikalisch polymerisierbaren Polymeren (a1) und Reaktivverdünner (a2), eingesetzt. Die Photoinitiatoren können einzeln oder in Kombination eingesetzt werden.

Neben den erwähnten Photoinitiatoren können sogenannte Photoaktivatoren, wie z.B. tertiäre Amine zugesetzt werden. Mit derartigen Kombinationen werden zuweilen synergistische Wirkungen erzielt.

Der erfindungsgemäße anodisch abscheidbare wäßrige Elektrotauchlack kann neben der wäßrigen Dispersion (A) und gegebenenfalls dem Photoinitiator (B) übliche Lackhilfsmittel und Zusatzstoffe wie z.B. Biozide, Lichtschutzmittel, Verlaufsmittel und gegebenenfalls Pigmente und/oder Füllstoffe enthalten.

Bei den Pigmenten und Füllstoffen kann es sich dabei handeln um die üblichen in der Lackindustrie einsetzbaren Füllstoffe und anorganischen oder organischen farb- und/oder effektgebenden Pigmente und Korrosionsschutzpigmente. Beispiele für anorganische und organische farbgebende Pigmente sind Titandioxid, mikronisiertes Titandioxid, Zinksulfid, Lithopone, Bleicarbonat, Bleisulfat, Zinnoxid, Antimonoxid, Eisenoxide, Chromgelb, Nickeltitangelb, Chromorange, Molybdatrot, Mineralviolett, Ultramarinviolett, Ultramarinblau, Kobaltblau, Chromoxidgrün, Ruß, Azo-, Phthalocyanin-, Chinacridon-, Perylen-, Perinon-, Anthrachinon-, Thioindigo- und Diketopyrrolopyrrolpigmente. Beispiele für Effektpigmente sind Metallpigmente, beispielsweise aus Aluminium, Kupfer oder anderen Metallen; Interferenzpigmente wie beispielsweise metalloxidbeschichtete Metallpigmente oder metalloxidbeschichtete Glimmer; Perlglanzpigmente und optisch variable Pigmente (OVP).

Beispiele für Füllstoffe sind Calciumcarbonat, Bariumsulfat, Talkum, Siliziumdioxid, Aluminiumsilikate, Magnesiumsilikate, Glimmer, Aluminiumhydroxid und Kieselsäuren. Die Füllstoffe können auch mit organischen Verbindungen modifiziert (gecoatet) sein, wobei die organischen Verbindungen auch UV-härtbare Gruppen enthalten können. Beispiele für derartige modifizierte Füllstoffe sind gecoatetes mikronisiertes Aluminiumoxid oder gecoatetes mikronisiertes Siliziumdioxid.

Der erfindungsgemäße anodisch abscheidbare wäßrige Elektrotauchlack kann auch weitere hydrophile und/oder hydrophobe Polymere mit oder ohne reaktiven Gruppen, wie beispielsweise Carboxyl-, Hydroxyl-, Amino- und andere Gruppen oder Mischungen dieser Polymeren enthalten, die gegebenenfalls auch thermisch vernetzt werden können.

Beispiele für solche Polymere sind gesättigte oder ungesättigte Polymere, wie beispielsweise Acrylat- oder Polyesterharze, acrylmodifizierte Acrylat- oder Polyesterharze, Epoxidharze, Aminoplastharze, Phenolharze und blockierte Polyisocyanate.

Die Herstellung des Elektrotauchlackes erfolgt durch Mischen der Komponenten (A) und gegebenenfalls (B) sowie weiterer Lackhilfs- und Zusatzstoffe beispielsweise unter Zuhilfenahme üblicher Mischaggregate wie z.B. (schnellaufende) Rührwerke, statische Mischer, Rotor-/Stator-Mischer und anderer Homogenisatoren.

Die gegebenenfalls mitverwendeten Pigmente und/oder Füllstoffe werden in bekannter Weise in einem Teil der Komponente (A) oder einem speziellen Pastenharz nach üblichen Dispergierverfahren zu einer Pigmentpaste verarbeitet, welche den Komponenten (A) und (B) wie oben beschrieben zugemischt wird.

Im Falle der Erstbefüllung eines Elektrotauchlackbades kann der so hergestellte Elektrotauchlack gegebenenfalls mit weiterem Neutralisationsmittel auf den gewünschten Bad-MEQ-Wert und mit vollentsalztem Wasser auf den gewünschten Badfestkörper eingestellt werden. Der MEQ-Wert ist ein Maß für den Gehalt an Neutralisationsmittel in einem Wasserlack. Er ist definiert als die Menge an Milliequivalenten des Neutralisationsmitttels bezogen auf 100 g Festkörper.

Im Falle der Nachkompensation werden die Säuregruppen der Komponente (A) bevorzugt nur teilweise neutralisiert um das bei der Abscheidung freiwerdende Neutralisationsmittel zu kompensieren.

Der Bad-MEQ-Wert beträgt beispielsweise 15 bis 70, bevorzugt 20 bis 45 Milliequivalent Neutralisationsmittel, z.B. Amin/100 g Festkörper, der Bad-Festkörper beträgt 5 bis 25 %, bevorzugt 8 bis 18 %.

Der erfindungsgemäße Elektrotauchlack eignet sich zur Beschichtung von Werkstücken mit elektrisch leitender Oberfläche, z.B. Metall, elektrisch leitendem (z.B. metallisiertem) Kunststoff, elektrisch leitendem Holz oder elektrisch leitenden Überzügen (z.B. Lacke), beispielsweise zur Grundierung und/oder Einschichtlackierung von Haus- und Elektrogeräten, Stahlmöbeln, Bauelementen und Landmaschinen- und Automobilzubehörteilen sowie Automobilkarossen, insbesondere zur Klarlackbeschichtung von Aluminium, wie beispielsweise von vorbehandelten Aluminiumprofilen, sowie zur Versiegelung von leitfähigen Schichten (z.B. Elektrotauchlackschichten).

Die mit dem erfindungsgemäßen Elektrotauchlack erstellten Schichten können aber auch in üblicher Weise mit weiteren Lackschichten zu einem Mehrschichtaufbau versehen werden.

In einer geeigneten Beschichtungsanlage wird das zu beschichtende Subtrat in das mit dem erfindungsgemäßen Elektrotauchlack befüllte Elektrotauchlackbad eingetaucht und gegenüber einer Gegenelektrode, die auch durch das Beschichtungsgefäß gebildet werden kann in einem Gleichstromkreis als Anode geschaltet. Derartige Beschichtungsanlagen sind dem Fachmann bekannt und beispielsweise in "Glasurithandbuch" 1984, Seiten 374 bis 384 beschrieben.

Beispielsweise wird bei einer Beschichtungstemperatur von 15 bis 30°C, bevorzugt von 18 bis 22°C bei einer Gleichspannung von 50 bis 500 Volt, bevorzugt von 100 bis 300 Volt bei einer Beschichtungszeit von 1 bis 5 Minuten, bevorzugt von 2 bis 3 Minuten ein Film bis zu Schichtdicken von 60 µm, bevorzugt zwischen 20 und 50 µm abgeschieden.

Die Abscheidung kann sowohl im Taktverfahren als auch im Durchlaufverfahren erfolgen.

Der abgeschiedene Film wird durch Abspülen mit Ultrafiltrat und/oder vollentsalztem Wasser von anhaftendem Badmaterial befreit, und durch Abblasen in einem gegebenenfalls erwärmten Luftstrom oder durch unterstütztes Ablüften mit einem IR-Strahler von anhängenden Wassertropfen befreit und zur Härtung einer energiereichen Strahlung, wie einer Elektronenstrahlung bevorzugt UV-Strahlung ausgesetzt.

Für die Strahlenhärtung der erfindungsgemäßen Beschichtungsmittel können beliebige bekannte Strahlungsquellen verwendet werden. Geeignet sind beispielsweise UV-Strahlungsquellen mit Emissionen im Wellenlängenbereich von 180 bis 420 nm, insbesondere von 200 bis 400 nm. Beispiele für solche UV-Strahlungsquellen sind Quecksilberhochdruck-, Mitteldruck- und Niederdruckstrahler, Gasentladungsröhren wie z.B. Xenondampf, Xenon-/Quecksilberdampf-, Germaniumdampf(niederdruck)-Lampen, UV-Licht emittierende Dioden, UV-Licht emittierende Laser. Die Bestrahlung kann auch mit gepulster Strahlung, beispielsweise mit gepulster UV-Strahlung erfolgen. Als Strahlungsquellen werden besonders bevorzugt sogenannte Hochenergieelektronenblitzeinrichtungen (UV-Blitzlampen) eingesetzt, wie sie beispielsweise in der WO-A-94 11 123 oder der EP-A-525 340 beschrieben und im Handel erhältlich sind.

Die Bestrahlungsdauer liegt beispielsweise im Bereich von 1 Millisekunde bis 30 Minuten, je nach Lacksystem und Strahlungsquelle. Der Abstand der Strahlungsquelle zur zu bestrahlenden Substratoberfläche beträgt beispielsweise 2 bis 50 cm, bevorzugt 5 bis 10 cm. Die Bestrahlungsdauer wird so gewählt, daß eine möglichst vollständige Aushärtung erreicht wird, d.h. die Ausbildung der geforderten technologischen Eigenschaften gewährleistet ist. Dazu kann die zu bestrahlende Substratoberfläche mehrmals an der Strahlungsquelle vorbeigeführt werden, oder bei der bevorzugten Verwendung von UV-Blitzlampen kann die Bestrahlung mit einer mehrfachen Blitzentladung erfolgen. Die Blitze können bespielsweise alle 4 Sekunden ausgelöst werden, da die UV-Blitzlampen keiner Einbrennzeit bedürfen.

Zur Vermeidung von Strahlungsaustritt sind die Strahlungsquellen gegenüber der Umgebung abgeschirmt.

Zusätzlich ist es möglich, eine thermische Aktivierung zur Vernetzung der erfindungsgemäßen Beschichtungsmittel anzuwenden, um Stellen, die nur in unzureichender Weise der Strahlung ausgesetzt werden können, auszuhärten.

Dazu kann es vorteilhaft sein, übliche thermisch aktivierbare Radikalinitiatoren mitzuverwenden, so daß im Anschluß an die Bestrahlung oder gleichzeitig mit der Bestrahlung eine thermisch aktivierte radikalische Polymerisation abläuft.

Beispiele für thermisch aktivierbare Radikalinitiatoren sind organische Peroxide, organische Azoverbindungen oder C-C-spaltende Initiatoren wie beispielsweise Dialkylperoxide, Peroxocarbonsäuren, Peroxidcarbonate, Peroxidiester, Hydroperoxide, Ketonperoxide, Azodinitrile oder Benzpinakolsilylether.

Die thermisch aktivierbaren Radikalinitiatoren können auch im Gemisch eingesetzt werden. Die bevorzugten Einsatzmengen liegen bei 0,1 bis 5 Gew.-%, bezogen auf die Summe der radikalisch polymerisierbaren Komponenten (a1) und (a2).

Die mit dem erfindungsgemäßen wäßrigen Elektrotauchlack abgeschiedenen und ausgehärteten Filme zeichnen sich durch einen hohen Glanz und sehr gute Haftung, insbesondere auf Aluminiumuntergründen und gute Kantenabdeckung aus. Neben hoher Kratzfestigkeit weisen sie ausgezeichnete Beständigkeiten gegen Säuren, Laugen und Lösemitttel sowie gegen Industrieatmosphäre, insbesondere saure Abgase, wie Schwefeldioxid, insbesondere in feuchter Atmosphäre auf, was sich beispielsweise durch den Kesternichtest (DIN bzw. ISO 3231) belegen läßt.

Weitere Vorteile sind ein vollautomatisiertes Verfahren, hoher Auftragswirkungsgrad, abfallarme Durchführbarkeit durch geschlossene Kreisläufe, lösemittelarme oder lösemittelfreie Arbeitsweise, extrem kurze Härtungszeiten und geringe thermische Belastung der zu lackierenden Substrate.

### Beispiel 1:

In einem Reaktionsgefäß mit Rührer, Thermometer und Rückflußkühler werden in einer Vorlage von 381,2 g Aceton, 349,4 g Isophorondiisocyanat und 82,0 g Dimethylolpropionsäure bei 60°C umgesetzt, bis ein NCO-Gehalt von 10 % erreicht ist. Nach Zugabe von 698,4 g eines Polyesterdiols aus Neopentylglykol, Adipinsäure und Isophthalsäure (OHZ = 106 mg KOH/g FH) läßt man weiter reagieren, bis ein NCO-Gehalt von 1,7 % erreicht ist.

Zu 500 g der so erhaltenen NCO-Prepolymerlösung werden 12,4 g Dodecanol und 15,5 g Hydroxyethylacrylat zugegeben und bei 60°C reagiert, bis der NCO-Gehalt unter 0,2 % gefallen ist.

Es wird mit 126,1 g Trimethylolpropantriacrylat verdünnt und das Aceton durch Vakuumdestillation entfernt.

500 g des so erhaltenen Polyurethanacrylates werden mit 13,3 g Dimethylethanolamin neutralisiert und nach 1 Stunde rühren bei 60°C in 928 g vollentsalztem Wasser dispergiert.

Die so erhaltene Dispersion hat einen Festkörpergehalt (30 Minuten 150°C) von 35 % und einen Gehalt an terminalen Doppelbindungen von 44 g Brom/100 g Festkörper.

In 857 Gew.-Teilen der Dispersion werden 9 Gew.-Teile 2-Hydroxy-2-methyl-1-phenylpropanon dispergiert. Anschließend wird mit 1134 Gew.-Teilen vollentsalztem Wasser verdünnt.

In dem so erhaltenen Elektrotauchlackbad werden zinkphosphatierte Stahlbleche bei einer Badtemperatur von 26°C 2 Minuten bei einem Vorwiderstand von 200 Ohm mit 100 bzw. 300 Volt beschichtet.

Der abgeschiedene Film wird mit Wasser abgespült und durch Abblasen mit Preßluft von anhängenden Wassertropfen befreit. Anschließend wird er auf einer Bandanlage mit 2 UV-Strahlern (80 W/cm) bei einer Bandgeschwindigkeit von 3 x 3 m gehärtet. Die gehärteten Filme haben eine Schichdicke von 25 bzw. 60 µm, sind hochglänzend und zeigen einen sehr guten Verlauf.

An den ausgehärteten Filmen mit 25 µm Schichtdicke wurden verschiedene Prüfungen durchgeführt.

| Testergebnisse: | |
|---|---|
| Kesternichtest nach DIN-ISO 3231 (0,21) (Beständigkeit gegen feuchte, Schwefeldioxid enthaltende Atmosphäre) | nach 10 Runden keine Blasenbildung auf der Fläche, kein Kantenrost, keine Verfärbungen |
| | |
| Erichsentiefung nach EN-ISO 1520 | 8,7 mm |
| | |
| Gitterschnitt nach EN-ISO 2409 | GT 0 |
| | |
| VDA-Steinschlagtest nach (lKg, 2 bar) | Kennwert < 1 |

## Patentansprüche

1. Wässriger, anodisch abscheidbarer Elektrotauchlack, enthaltend
(A) eine wässrige Dispersion die ein oder mehrere anionisch modifizierte Polyurethan(meth)acrylate (a1) mit terminalen, ethylenisch ungesättigten (meth)acrylischen Doppelbindungen, und einen oder mehrere Reaktivverdünner (a2) mit mindestens zwei ethylenisch ungesättigten (meth)acrylischen Doppelbindungen enthält, wobei die (meth)acrylischen Doppelbindungen des Gemisches aus (a1) und (a2) einer Bromzahl von 20 bis 150 g Brom/100 g Festkörper entsprechen, sowie
(B) gegebenenfalls einen oder mehrere Photoinitiatoren und/oder gegebenenfalls einen oder mehrere thermisch aktivierbare Radikalinitiatoren,
wobei die terminalen ethylenisch ungesättigten (meth)acrylischen Doppelbindungen der Polyurethan(meth)acrylate über Urethan-, Harnstoff-, Amid oder Estergruppen mit dem anionisch modifizierten Polyurethanprepolymeren verbunden sind,
sowie gegebenenfalls übliche Hilfs- und Zusatzstoffe, Pigmente und/oder Füllstoffe, wobei
die wässrige Dispersion A)
40 bis 85 Gew.-% der Komponente a1) und
15 bis 60 Gew.-% der Komponente a2), jeweils bezogen auf den Festkörpergehalt der Komponente A) enthält und der Festkörpergehalt 30 bis 70 Gew,-% beträgt, und wobei die wässrige Dispersion A) erhältlich ist durch Bereitung des Polyurethan(meth)acrylats (a1), durch Herstellung eines Urethanprepolymers mit terminalen NCO-Gruppen, durch Umsetzung von:
i) einem oder mehreren aliphatischen, cycloallphatischen, araliphatischen und/oder aromatischen Polyisocyanaten,
ii) einer oder mehreren Polyhydroxylverbindungen mit einem zahlenmittleren Molekulargewicht Mn von 400 bis 5000,
iii) einer oder mehreren Verbindungen mit einer anionischen Gruppen und zwei gegenüber Isocyanaten funktionellen Gruppen,
iv) gegebenenfalls einer oder mehreren Polyhydroxylverbindungen mit einem zahlenmittleren Molekulargewicht Mn von 60 bis unter 400,
und anschließende Umsetzung des so erhaltenen Urethanprepolymers
v) mit einer oder mehreren Verbindungen, die eine oder mehrere ethylenisch ungesättigte (meth)acrylische Gruppen und eine oder mehrere gegenüber Isocyanat reaktive Gruppe aufweisen, ausgewählt aus Hydroxyalkyl(meth)acrylaten, Aminoalkyl(meth)acrylaten und/oder (Methy)acrylamiden und/oder mit einer oder mehreren Verbindungen, die eine mit Isocyanat reaktive Gruppe und eine zur Einführung einer (meth)acrylischen Estergruppe geeignete Gruppe aufweisen und anschließende Umsetzung zur Einführung einer (meth)acrylischen Estergruppe,
vi) und gegebenenfalls mit einer oder mehreren Verbindungen mit einer oder mehreren gegenüber Isocyanat reaktiven Gruppen, die keine (meth)acrylischen Doppelbindungen aufweisen,
worauf mit dem Reaktivverdünner a2) verdünnt und unter zumindest teilweiser Neutralisation i die wässrige Phase überführt wird.

2. Elektrotauchlack nach Anspruch 1, **dadurch gekennzeichnet, dass** die Bromzahl der Komponente (a1) 4 bis 80 g Brom/100 g Festharz beträgt.

3. Verfahren zur Herstellung einer für Elektrotauchlacke nach einem der Ansprüche 1 order 2 geeigneten wässrigen Dispersion A), **dadurch gekennzeichnet, dass** ein Urethanprepolymer mit terminalen NCO-Gruppen hergestellt wird durch Umsetzung von
i) einem oder mehreren aliphatischen, cycloaliphatischen, araliphatischen und/oder aromatischen Polyisocyanaten,
ii) einer oder mehreren Polyhydroxylverbindungen mit einem zahlenmittleren Molekulargewicht Mn von 400 bis 5000,
iii) einer oder mehreren Verbindungen mit einer anionischen Gruppen und zwei gegenüber Isocyanaten funktionellen Gruppen
iv) gegebenenfalls einer oder mehreren Polyhydroxylverbindungen mit einem zahlenmittleren Molekulargewicht Mn von 60 bis unter 400,
und das so erhaltene Urethanprepolymer anschließend umgesetzt wird
v) mit einer oder mehreren Verbindungen, die eine oder mehrere ethylenisch ungesättigte (meth)acrylische Gruppen und eine oder mehrere gegenüber Isocyanat reaktive Gruppen aufweisen, ausgewählt aus Hydroxyalkyl(meth)acrylaten, Aminoalkyl(meth)acrylaten und/oder (Meth)acrylamiden und/oder mit einer oder mehreren Verbindungen, die eine mit Isocyanat reaktive Gruppe und eine zur Einführung einer (meth)acrylischen Estergruppe geeignete Gruppe aufweisen und anschließende Umsetzung zur Einführung einer (meth)acrylischen Estergruppe,
vi) und gegebenenfalls mit einer oder mehreren Verbindungen mit einer oder mehreren gegenüber Isocyanat reaktiven Gruppen, die keine (meth)acrylischen Doppelbindungen aufweisen,
worauf mit dem Reaktivverdünner a2) verdünnt und unter zumindest teilweiser Neutralisation in die wässrige Phase überführt wird.

4. Verfahren zur Elektrotauchlackierung von elektrisch leitfähigen Substraten durch Eintauchen in einen wässrigen Elektrotauchlack, Schalten des Substrats als Anode und Härten des abgeschiedenen Films, **dadurch gekennzeichnet, dass** man einen Elektrotauchlack nach einem der Ansprüche 1 oder 2 verwendet und die Härtung mittels energiereicher Strahlung durchführt.

5. Verfahren nach Anspruch 4, **dadurch gekennzeichnet, dass** zusätzlich thermisch gehärtet wird.

6. Lackiertes Substrat, erhalten nach dem Verfahren von Anspruch 4 oder 5.

7. Verwendung der Elektrotauchlacke nach einem der Ansprüche 1 oder 2 zur Elektrotauch-Lackierung von elektrisch leitfähigen Substraten.

## Claims

1. Aqueous, electrophoretic lacquer capable of anodic deposition, containing
A) an aqueous dispersion which contains one or more anionically modified polyurethane (meth)acrylates (a1) with terminal, ethylenically unsaturated (meth)acrylic double bonds and one or more reactive thinners (a2) with at least two ethylenically unsaturated (meth)acrylic double bonds, the (meth)acrylic double bonds in the mixture of (a1) and (a2) corresponding to a bromine number of 20 to 150 g bromine/100 g solids, and
B) optionally one or more photoinitiators and/or optionally one or more thermally-activatable free-radical initiators,
wherein the terminal, ethylenically unsaturated (meth)acrylic double bonds of the polyurethane (meth)acrylates are bonded with the anionically modified polyurethane prepolymer via urethane, urea, amide or ester groups,
and optionally conventional auxiliary substances and additives, pigments and/or fillers, wherein
the aqueous dispersion A) contains
40 to 85 wt.% of the component a1) and
15 to 60 wt.% of the component a2), each based on the solids content of component A), and the solids content is 30 to 70 wt.%, and wherein the aqueous dispersion A) is obtainable by preparing the polyurethane (meth)acrylate (a1) by producing a urethane prepolymer with terminal NCO groups, by reacting:
i) one or more aliphatic, cycloaliphatic, araliphatic and/or aromatic polyisocyanates,
ii) one or more polyhydroxyl compounds with a number average molecular weight Mn of 400 to 5000,
iii) one or more compounds with one anionic group and two groups that are functional with respect to isocyanates,
iv) optionally one or more polyhydroxyl compounds with a number average molecular weight Mn of 60 to less than 400,
and subsequent reaction of the urethane prepolymer thus obtained
v) with one or more compounds containing one or more ethylenically unsaturated (meth)acrylic groups and one or more groups that are reactive with respect to isocyanate, selected from hydroxyalkyl (meth)acrylates, aminoalkyl (meth)acrylates and/or (meth)acrylamides and/or with one or more compounds containing a group that is reactive with isocyanate and a group that is suitable for introducing a (meth)acrylic ester group, and subsequent reaction to introduce a (meth)acrylic ester group,
vi) and optionally with one or more compounds with one or more groups that are reactive with respect to isocyanate, having no (meth)acrylic double bonds,
whereupon dilution is carried out with the reactive thinner a2) and transfer into the aqueous phase is performed with at least partial neutralisation.

2. Electrophoretic lacquer according to claim 1, **characterised in that** the bromine number of the component (a1) is 4 to 80 g bromine/100 g solid resin.

3. Process for the production of an aqueous dispersion A) suitable for electrophoretic lacquers according to one of claims 1 or 2, **characterised in that** a urethane prepolymer with terminal NCO groups is produced by the reaction of
i) one or more aliphatic, cycloaliphatic, araliphatic and/or aromatic polyisocyanates,
ii) one or more polyhydroxyl compounds with a number average molecular weight Mn of 400 to 5000,
iii) one or more compounds with one anionic group and two groups that are functional with respect to isocyanates,
iv) optionally one or more polyhydroxyl compounds with a number average molecular weight Mn of 60 to less than 400,
and the urethane prepolymer thus obtained is subsequently reacted
v) with one or more compounds containing one or more ethylenically unsaturated (meth)acrylic groups and one or more groups that are reactive with respect to isocyanate, selected from hydroxyalkyl (meth)acrylates, aminoalkyl (meth)acrylates and/or (meth)acrylamides and/or with one or more compounds containing a group that is reactive with isocyanate and a group that is suitable for introducing a (meth)acrylic ester group, and subsequent reaction to introduce a (meth)acrylic ester group,
vi) and optionally with one or more compounds with one or more groups that are reactive with respect to isocyanate, having no (meth)acrylic double bonds,
whereupon dilution is carried out with the reactive thinner a2) and transfer into the aqueous phase is performed with at least partial neutralisation.

4. Process for the electrophoretic coating of electrically conductive substrates by immersing in an aqueous electrophoretic lacquer, connecting the substrate as anode and curing the deposited film, **characterised in that** an electrophoretic lacquer according to one of claims 1 or 2 is used and the curing is performed by means of high-energy radiation.

5. Process according to claim 4, **characterised in that** thermal curing is additionally performed.

6. Lacquered substrate obtained by the process of claim 4 or 5.

7. Use of the electrophoretic lacquers according to one of claims 1 or 2 for the electrophoretic coating of electrically conductive substrates.

## Revendications

1. Peinture aqueuse d'électrodéposition anodique, contenant :
(A) une dispersion aqueuse, qui contient un ou plusieurs (méth)acrylates de polyuréthanne modifiés de manière anionique (a1) avec des doubles liaisons (méth)acryliques éthyléniquement insaturées terminales, et un ou plusieurs diluants réactifs (a2) avec au moins deux doubles liaisons (méth)acryliques éthyléniquement insaturées, où les doubles liaisons (méth)acryliques du mélange de (a1) et de (a2) correspondent à un indice de brome allant de 20 à 150 g de brome/100 g de matière solide, ainsi que
(B) le cas échéant, un ou plusieurs photoinitiateurs et/ou le cas échéant, un ou plusieurs initiateurs radicalaires thermiquement activables,
où les doubles liaisons (méth)acryliques éthyléniquement insaturées terminales du (méth)acrylate de polyuréthanne sont reliées par des radicaux uréthanne, urée, amide ou ester au prépolymète de polyuréthanne modifié de manière anionique,
ainsi que le cas échéant, les additifs et auxiliaires usuels, des pigments et/ou charges, où
la dispersion aqueuse (A) contient
40 à 85% en poids du composant a1), et
15 à 60% en poids du composant a2), chaque fois sur base de la teneur en matière solide du composant A) et où la teneur en matière solide se situe dans l'intervalle allant de 30 à 70% en poids, et où là dispersion aqueuse (A) peut être obtenue par traitement du (méth)acrylate de polyuréthanne (a1), par préparation d'un prépolymère d'uréthanne avec des radicaux NCO terminaux, par réaction de :
I) un ou plusieurs polyisocyanates aliphatiques, cycloaliphatiques, araliphatiques et/ou aromatiques,
II) un ou plusieurs composés polyhydroxylés avec un poids moléculaire moyen en nombre Mn allant de 400 à 5000,
III) un ou plusieurs composés avec un radical anionique et deux radicaux fonctionnels vis-à-vis des isocyanates,
IV) le cas échéant, un ou plusieurs composés polyhydroxylés avec un poids moléculaire moyen en nombre Mn allant de 60 à 400,
et ensuite, réaction du prépolymère d'uréthanne ainsi obtenu
V) avec un ou plusieurs composés, qui présentent un ou plusieurs radicaux (méth)acryliques éthyléniquement insaturés et un ou plusieurs radicaux réactifs vis-à-vis des isocyanates, choisis parmi les (méth)acrylates d'hydroxyalkyle, les (méth)acrylates d'aminoalkyle et/ou les (méth)acrylamides, et/ou avec un ou plusieurs composés, qui présentent un radical réactif vis-à-vis des isocyanates et un radical approprié pour l'introduction d'un radical ester (méth)acrylique et ensuite, réaction pour introduire un radical ester (méth)acrylique,
VI) et le cas échéant, avec un ou plusieurs composés avec un ou plusieurs radicaux réactifs avec les isocyanates, qui ne présentent pas de double liaison (méth)acrylique,
où on dilue avec le diluant réactif (a2) et on fait passer en phase aqueuse par une neutralisation au moins partielle.

2. Peinture d'électrodéposition selon la revendication 1, **caractérisée en ce que** l'indice de brome du composant (a1) se situe dans l'intervalle allant de 4 à 80 g de brome/100 g de résine solide.

3. Procédé de préparation d'une dispersion aqueuse A) appropriée pour les peintures d'électrodéposition selon l'une quelconque des revendications 1 ou 2, **caractérisé en ce que** l'on prépare un prépolymère d'uréthanne avec des radicaux NCO terminaux, par réaction de :
I) un ou plusieurs polyisocyanates aliphatiques, cycloaliphatiques, araliphatiques et/ou aromatiques,
II) un ou plusieurs composés polyhydroxylés avec un poids moléculaire moyen en nombre Mn allant de 400 à 5000,
III) un ou plusieurs composés avec un radical anionique et deux radicaux fonctionnels vis-à-vis des isocyanates,
IV) le cas échéant, un ou plusieurs composés polyhydroxylés avec un poids moléculaire moyen en nombre Mn allant de 60 à 400,
et ensuite, on fait réagir le prépolymère d'uréthanne ainsi obtenu
V) avec un ou plusieurs composés, qui présentent un ou plusieurs radicaux (méth)acryliques éthyléniquement insaturés et un ou plusieurs radicaux réactifs vis-à-vis des isocyanates, choisis parmi les (méth)acrylates d'hydroxyalkyle, les (méth)acrylates d'aminoalkyle et/ou les (méth)acrylamides, et/ou avec un ou plusieurs composés, qui présentent un radical réactif vis-à-vis des isocyanates et un radical approprié pour l'introduction d'un radical ester (méth)acrylique et ensuite, réaction pour introduire un radical ester (méth)acrylique,
VI) et le cas échéant, avec un ou plusieurs composés avec un ou plusieurs radicaux réactifs avec les isocyanates, qui ne présentent pas de double liaison (méth)acrylique,
où on dilue avec le diluant réactif (a2) et on fait passer en phase aqueuse par une neutralisation au moins partielle.

4. Procédé de peinture par électrodéposition de substrats conducteurs de l'électricité par immersion dans une peinture d'électrodéposition aqueuse, raccordement du substrat comme anode et durcissement du film déposé, **caractérisé en ce que** l'on utilise une peinture d'électrodéposition selon l'une quelconque des revendications 1 ou 2 et que le durcissement est réalisé à l'aide d'un rayonnement énergétique.

5. Procédé selon la revendication 4, **caractérisé en ce que** l'on durcit en outre, de manière thermique.

6. Substrat peint, obtenu par le procédé selon la revendication 4 ou 5.

7. Utilisation d'une peinture d'électrodéposition selon l'une quelconque des revendications 1 ou 2 pour la peinture par électrodéposition de substrats conducteurs de l'électricité.
